# EUROPEAN PATENT SPECIFICATION

(11) **EP 2 010 303 B1**
(45) Date of publication and mention of the grant of the patent: **05.09.2012**
(21) Application number: 07745906.3
(22) Date of filing: 11.04.2007
(51) Int. Cl.: B01D 29/11, B01D 35/10

(54) **FINE FILTERING APPARATUS USING FLEXIBLE FIBER FILTER MODULE**
EIN FLEXIBLES FASERFILTERMODUL VERWENDENDE FEINSTFILTERUNGSVORRICHTUNG
DISPOSITIF DE FILTRAGE FIN COMPRENANT UN MODULE DE FILTRAGE A FIBRES FLEXIBLES

(30) Priority: 13.04.2006 KR 20060033525
(43) Date of publication of application: 07.01.2009
(73) Proprietor: Nanoentech Co., Ltd., Yangsan-city, Kyungsangbuk-do 626-220 (KR)
(72) Inventor: HAN, Gi-Baek, Seoul, 138-120 (KR); KIM, Hu-Soo, Busan-city 614-012 (KR); KOO, Jung-In, Yangsan Si, Gyeongsangnam-do 626-766 (KR); LEE, Hae-Bum, Daegu-city 701-030 (KR)
(74) Representative: Trossin, Hans-Jürgen
(86) International application number: PCT/KR2007/001743
(87) International publication number: WO 2007/119958

(56) References cited:
- WO-A1-02/076572
- WO-A1-2005/042132
- WO-A1-2005/084776
- WO-A1-2007/119957
- FR-A1- 2 168 204
- KR-A- 20020 068 009
- KR-B1- 100 530 806
- US-A- 4 626 345
- US-A- 4 913 815
- US-A1- 2003 127 402
- US-B1- 6 183 639

## Description

### Technical Field

The present invention relates to a filtering apparatus according to the preamble part of claim 1 known from WO 2005/084 776 A1

### Background Art

In order to use river water, ground water, and surface water as drinking water, a water purification process is required to remove suspended solid, algae, and fine particles, which remain in river water or ground water.

The conventional water purification process is performed using a filtration process after condensing and precipitating the contaminants and this has been done for more than 100 years. A slow filtration process (filtration rate of 5 ~ 10m/d) among the filtration processes of the water purification process is applied to surface water in which the water quality thereof is relatively good and is performed by adsorption and a chemical reaction by a biological membrane within a sand layer. A relatively slow filtration rate of the slow filtration process makes it almost impossible to cope with rapidly increasing population and water pollution and thus, an introduction of a rapid filtration process is essential. Currently, about 80% of domestic water purification plants have adopted the rapid filtration process.

### Disclosure of Invention

### Technical Problem

However, such a water purification process can produce drinking water from river water or ground water only after performing all the processes such as condensing, precipitating, and filtering and thus, is time consuming. Subsequently, the efficiency of the water purification process is reduced. Therefore, development of a filtering apparatus is required to shorten the process time, while increasing efficiency of the water purification process.

### Technical Solution

The present invention provides a filtering apparatus according to claim 1 to improve filtering efficiency of contaminated fluid.

### Advantageous Effects

The apparatus having the structure described above has the following effects.

Since the inner cylindrical member is disposed in the inner center of the outer cylindrical member and the filter media is interposed between the outer cylindrical member and inner cylindrical member, both the filtration and washing processes are performed in one unit. Therefore, the filtering apparatus according to the present invention needs only a small space to operate and improves filtration efficiency.

In addition, the lower ring pipeline disposed in the lower outer part of the outer cylindrical member is disposed to form an annular internal space between the outer cylindrical member and the lower ring pipeline and thus, source water is uniformly dispersed and flows into the inside of the outer cylindrical member through the internal space, thereby reducing fluid resistance and increasing fluid velocity, resulting in an increase of filtration efficiency.

Moreover, since the washing water discharge pipeline is connected to the upper part of the outer cylindrical member in order for washing water and compressed air, used to wash the filter media, to flow in an appropriate upward direction from the lower part of the outer cylindrical member, and the filtered water discharge pipeline is disposed to penetrate the side portion of the outer cylindrical member in a direction along its diameter, the efficiency of the washing process is increased due to a decrease in the filtration resistance of the washing water and the efficiency of the filtration process is also increased.

### Description of Drawings

The above and other features and advantages of the present invention will become more apparent by describing in detail exemplary embodiments thereof with reference to the attached drawings in which:

FIG. 1 is a view schematically illustrating a state of a water purification system, using a filtering apparatus according to an embodiment of the present invention, when operated;

FIG. 2 is a front view of a filtering apparatus according to an embodiment of the present invention;

FIG. 3 is a cross sectional view of the filtering apparatus of FIG. 2 taken along a line III-III in FIG. 2;

FIG. 4 is a cross sectional view of the filtering apparatus of FIG. 2 taken along a line IV-IV in FIG. 2;

FIG. 5 is a cross sectional view of the filtering apparatus of FIG. 2 taken along a line V-V in FIG. 2;

FIG. 6 is a cross sectional view of the filtering apparatus of FIG. 2 taken along a line VI - VI in FIG. 2;

FIG. 7 is a view illustrating a process of washing the filtering apparatus according to an embodiment of the present invention; and

FIG. 8 is a cross sectional view of a further filtering apparatus that is not covered by claim 1.

### Best Mode

Hereinafter, the present invention will be described more fully with reference to the accompanying drawings, in which exemplary embodiments of the invention are shown.

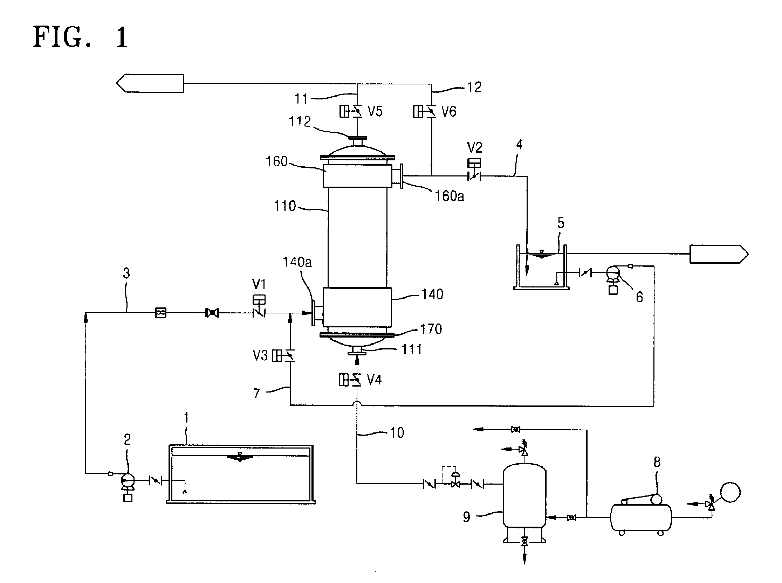

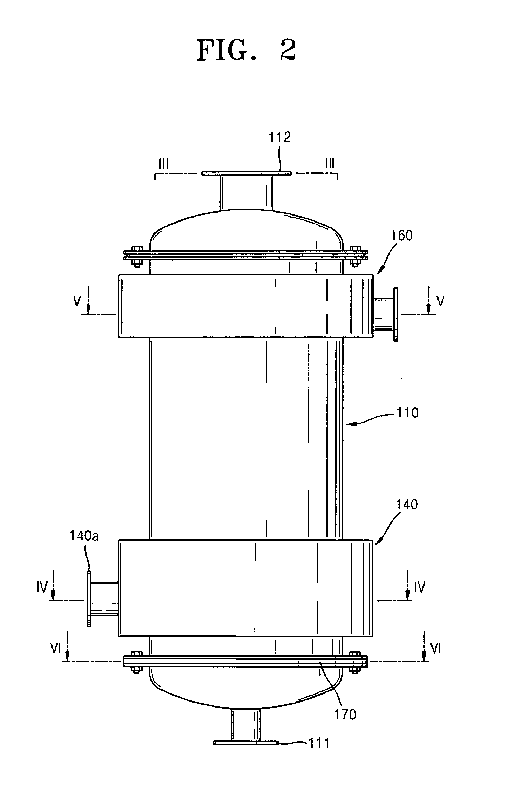

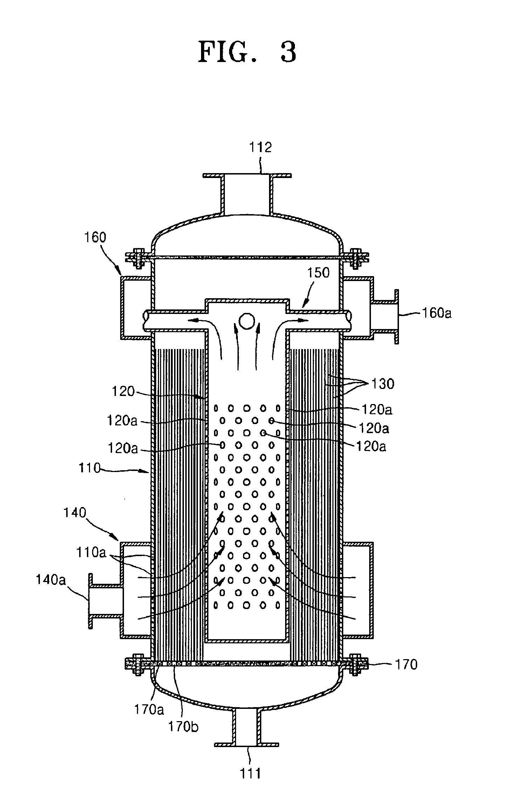

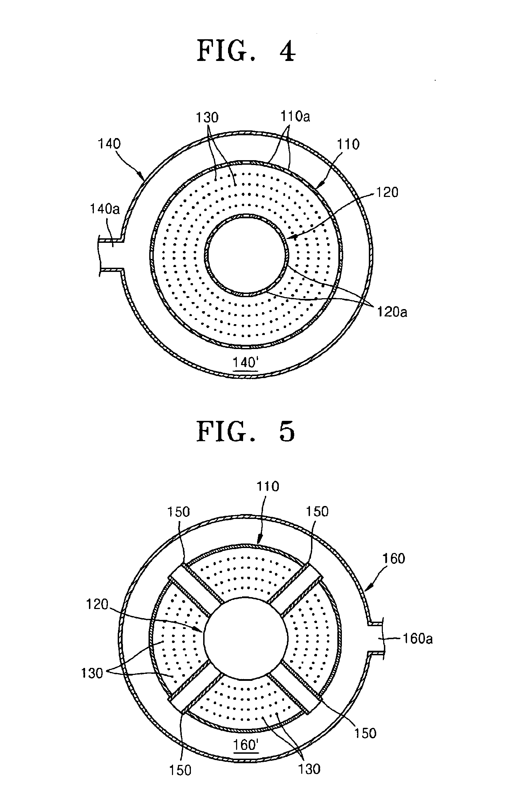

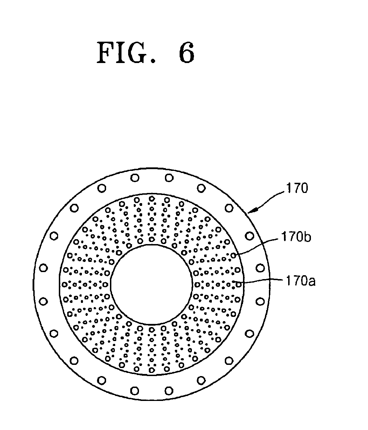

FIG. 1 is a view schematically illustrating a state of a water purification system, using a filtering apparatus according to an embodiment of the present invention, when operated, FIG. 2 is a front view of a filtering apparatus according to an embodiment of the present invention, FIG. 3 is a cross sectional view of the filtering apparatus of FIG. 2 taken along a line III-III in FIG. 2, FIG. 4 is a cross sectional view of the filtering apparatus of FIG. 2 taken along a line IV-IV in FIG. 2, FIG. 5 is a cross sectional view of the filtering apparatus of FIG. 2 taken along a line V-V in FIG. 2, and FIG. 6 is a cross sectional view of the filtering apparatus of FIG. 2 taken along a line VI-VI in FIG. 2.

Referring to FIGS. 1 through 6, a fine filtering apparatus using a flexible fiber filter module (hereinafter, referred to as 'a filtering apparatus') according to an embodiment ofthe present invention includes an outer cylindrical member 110, an inner cylindrical member 120, a filter media, a lower ring pipeline 140, and a filtered water discharge pipeline 150.

The outer cylindrical member 110 is a hollow cylinder and has a number of source water inlet holes 110A which penetrate an inner surface and an outer surface of the outer cylindrical member 110. The source water inlet holes 110A are disposed in the lower part of the outer cylindrical member 110 in order for source water, which is supplied from outside, to flow into the outer cylindrical member 110. Here, the 'outside' refers to a source water tank 1. The source water tank 1 contains source water which needs to be purified and is connected with the outer cylindrical member 110 through the lower ring pipeline 140 which will be described below.

Since the source water inlet holes 110A are disposed in the outer cylindrical member 110, source water can evenly flow into the outer cylindrical member 110.

In addition, an air inlet 111, which is connected to an air inlet pipeline 10, is disposed in the lower part of the outer cylindrical member 110 according to an embodiment of the present invention. A washing water outlet 112, which is connected to a washing water discharge pipeline 11, is disposed in the upper part of the outer cylindrical member 110.

The inner cylindrical member 120 is disposed in an inner center of the outer cylindrical member 110. The inner cylindrical member 120 is a hollow cylinder and has a number of filtered water inlet holes 120A which penetrate an inner surface and an outer surface of the inner cylindrical member 120.

The filtered water inlet holes 120A disposed in the lowermost part of the inner cylindrical member 120 may be disposed lower than the source water inlet holes 110A disposed in the uppermost part of the outer cylindrical member 110. By using this structure, source water which flows into the outer cylindrical member 110 can smoothly and rapidly flow into the inner cylindrical member 120.

The filter media is interposed between the outer cylindrical member 110 and the inner cylindrical member 120. The filter media filters source water flowing from the source water inlet holes 110A. That is, source water becomes filtered water after suspended solid and fine particles are captured using the filter media. This filtered water flows into the inner cylindrical member 120 through the filtered water inlet holes 120A disposed in the inner cylindrical member 120.

The filter media according to an embodiment of the present invention is formed of a number of flexible fibers 130. The flexible fibers 130 have appropriate surface roughness, flexibility, and elasticity. The thickness of the flexible fibers 130 is adjustable according to the size of suspended solids to be removed from the water.

The lower part of the flexible fibers 130 is installed by being fixed at a number of fiber fixing holes 170A disposed in a fixing plate 170 and the upper part of the flexible fibers 130 is not fixed so as to maintain the fibers' flexibility.

The lower ring pipeline 140 is disposed in the lower outer part of the outer cylindrical member 110 to surround the source water inlet holes 110A, and an annular internal space 140' for connecting the source water inlet holes 110A is formed in the lower ring pipeline 140.

In addition, the lower ring pipeline 140 comprises a source water inlet 140A for source water to flow into the internal space 140'. Here, the source water inlet 140A is a portion of the lower ring pipeline 140, which joins a source water inlet pipeline 3 providing a moving path for source water contained in the source water tank 1 and a washing water inlet pipeline 7 washing the flexible fibers 130.

The lower ring pipeline 140 makes source water, which has flowed in through the source water inlet 140A, flow evenly into the outer cylindrical member 110 and improves the efficiency of filtration of the source water.

Source water which has flowed into the outer cylindrical member 110 via the lower ring pipeline 140 is filtered using the flexible fibers 130. Then, filtered source water is made to flow into the inner cylindrical member 120 and is discharged out of the outer cylindrical member 110 via filtered water discharge pipelines 150.

One end part of the filtered water discharge pipelines 150 is joined to the inner cylindrical member 120 and the other end part thereof penetrates the side portion of the outer cylindrical member 110 in a direction along its diameter, so as to discharge filtered water after passing through the flexible fibers 130 out of the side of the outer cylindrical member 110.

In an embodiment of the present invention, the plurality of the filtered water discharge pipelines 150 is disposed in the inner cylindrical member 120 in a cylindrical direction.

According to an embodiment of the present invention, an upper ring pipeline 160 may be also disposed. The upper ring pipeline 160 is disposed in the upper outer part of the outer cylindrical member 110 to surround the filtered water discharge pipelines 150 and an annular internal space 160' for connecting with the plurality of filtered water discharge pipelines 150 is formed in the upper ring pipeline 160. Also, the upper ring pipeline 160 comprises a filtered water outlet 160A which is connected to the internal space 160'. Here, the filtered water outlet 160A is a portion of the upper ring pipeline 160, which joins with a filtered water transportation pipeline 4 for transporting filtered water.

The upper ring pipeline 160 makes filtered water, which has flowed into the inner cylindrical member 120, flow evenly into the internal space 160' and thus, prevents a large amount of fluid from being discharged via the filtered water outlet 160A at any given time.

According to the present invention, the washing water inlet pipeline 7, which is connected to the source water inlet 140A, and the washing water discharge pipeline 11, which is connected to the washing water outlet 112, may also be disposed.

The washing water inlet pipeline 7 provides a moving path for washing water to wash the flexible fibers 130. Here, the washing water separates suspended solids adsorbed in the flexible fibers 130 in the outer cylindrical member 110.

The washing water discharge pipeline 11 is used to discharge washing water, used to wash the flexible fibers 130, to the outside. The washing water may be filtered water contained in a water treatment tank 5.

An air inlet pipeline 10 is connected to the air inlet 111. The air inlet pipeline 10 is used to supply air to washing water made to flow into the outer cylindrical member 110. Here, the 'air' refers to compressed air compressed using an air compressor 8. The compressed air is contained in an air storage tank 9 and is made to flow into the air inlet 111 through the air inlet pipeline 10, when a fourth valve V4 is opened.

The compressed air in the air inlet 111 flows into a space between the outer cylindrical member 110, in which the flexible fibers 130 are disposed, and the inner cylindrical member 120, via air inlet holes 170B disposed in a fixing plate 170 and thus, turbulence occurs in the outer cylindrical member 110. Accordingly, separation of suspended solids adsorbed in the flexible fibers 130 is accomplished due to the turbulence which occurs.

According to an embodiment of the present invention, the washing water inlet pipeline 7 may be connected to the source water inlet 140A disposed at the lower ring pipeline 140, the air inlet pipeline 10 may be connected to the lower part of the outer cylindrical member 110, and the washing water discharge pipeline 11 may be connected to the upper part of the outer cylindrical member 110. Subsequently, a washing process is performed in a same direction as the filtration direction of source water and thus, the efficiency of washing the flexible fibers 130 is increased.

Hereinafter, operation of the fine filtering apparatus according to a filtration process will now be described in detail.

In the source water filtration process, only a first valve V1 and a second valve V2 are opened and third and fourth valves V3 and V4 and fifth and sixth valve V5 and V6 are closed.

In this case, when a first pump 2 is operated, source water contained in the source water tank 1 is made to flow into the source water inlet 140A via the source water inlet pipeline 3. As illustrated in FIG. 3, source water flowing into the source water inlet 140A flows uniformly into the internal space 140' interposed between the lower ring pipeline 140 and the outer cylindrical member 110 and then, is made to flow into the outer cylindrical member 110 via the source water inlet hole 110A.

The source water flowing into the outer cylindrical member 110 is filtered by the filter media which is formed of a number of flexible fibers 130 and thus becomes filtered water and the filtered water is made to flow into the inner cylindrical member 120 via the filtered water inlet holes 120A. Then, the filtered water flows uniformly into the internal space 160', interposed between the outer cylindrical member 110 and the upper ring pipeline 160, via the filtered water discharge pipelines 150 which is connected to the upper part of the inner cylindrical member 120.

In an embodiment of the present invention, the plurality of filtered water discharge pipelines 150 makes filtered water discharge smoothly through the filtered water outlet 160A without resistance.

Filtered water discharged through the filtered water outlet 160A is contained in a water treatment tank 5 via a filtered water transportation pipeline 4. Since filtered water is contained in the water treatment tank 5, this can be used in various ways such as for drinking water.

As described in the filtration process above, the lower ring pipeline 140 is disposed to surround the lower part of the outer cylindrical member 110 and thus, source water is smoothly flowed into the outer cylindrical member 110. Also, the upper ring pipeline 160 is disposed to surround the upper part of the outer cylindrical member 110 and thus, filtered water is smoothly discharged out of the outer cylindrical member 110. Accordingly, in the present invention, filtration resistance of source water is reduced, resulting in increase of filtration efficiency.

In addition, in the inner cylindrical member 120, the filtered water inlet holes 120A, disposed in the lowermost part of the inner cylindrical member 120, are disposed in the inner center of the outer cylindrical member 110 to be disposed lower than the source water inlet holes 110A disposed in the uppermost part of the outer cylindrical member 110 and thus, source water flowing into the lower part of the outer cylindrical member 110 flows directly into the lower part of the inner cylindrical member 120 after passing through the flexible fibers 130. Therefore, in the present invention, the filtration rate is increased and filtration resistance is reduced, resulting in an increase of filtration efficiency.

When the filtration process described above is performed continuously, the amount of suspended solids and fine particles captured by the flexible fibers 130 is increased, thereby increasing filtration resistance and reducing the filtration rate, resulting in a reduction in the amount of material filtered. When the amount of material filtered is below a predetermined amount, or when a filtration pressure is above a predetermined value, or when the predetermined filtration duration reaches a predetermined value, a washing process is performed to wash the flexible fibers 130.

Hereinafter, an operation of the fine filtering apparatus according to a washing process will now be described in detail.

In the filtration process, in order to wash the flexible fibers 130, the first, second, and sixth valves V1,V2, and V6 are closed, the fifth valve V is opened, and the third and fourth valves V3 and V4 are alternatively opened and closed. In an embodiment of the present invention, filtered water contained in the water treatment tank 5 is used as washing water.

When a second pump 6 is operated, washing water is made to flow into the source water inlet 140A via the washing water inlet pipeline 7 and then, is made to flow into the space interposed between the outer cylindrical member 110 and the inner cylindrical member 120. In such a process, when a predetermined amount of washing water flows into the space, the third valve V3 is automatically closed and the fourth valve V4 is opened.

Since the fourth valve V4 is opened, compressed air contained in the air storage tank 9 is made to flow into the air inlet 111 via the air inlet pipeline 10 and then, is made to flow into the space between the outer cylindrical member 110 and the inner cylindrical member 120 via the air inlet holes 170B formed on the fixing plate 170.

As illustrated above, washing water and compressed air are alternatively made to flow into the space between the cylindrical member 110 and the inner cylindrical member 120 and thus, a larger turbulence occurs in the space. Therefore, shear force is generated by the turbulence and separation of suspended solids captured by the flexible fibers 130 is accomplished in a short time.

The suspended solids separated from the flexible fibers 130 are mixed with washing water to become a concentrated solution and the solution is discharged outside via the washing water discharge pipeline 11.

In an embodiment of the present invention, washing water may be filtered water contained in the water treatment tank 5 but source water also can be used as washing water.

As described in the washing process above, the flexible fibers 130 are disposed in the space between the outer cylindrical member 110 and the inner cylindrical member 120 and thus, separated suspended solids cannot flow into the inner cylindrical member 120 after washing the flexible fibers 130. Accordingly, when the filtration process is performed after the washing process is completed, the suspended solids are prevented from flowing into the water treatment tank 5 after suspended solids flow into the inner cylindrical member 120.

In addition, washing water and compressed air used to wash the flexible fibers 130 are made to flow into the lower part of the outer cylindrical member 110 and are discharged from the apparatus via the washing water outlet 112 disposed in the upper part of the outer cylindrical member 110. Subsequently, fluid resistance is reduced during the washing process and thus, the washing process is efficiently performed.

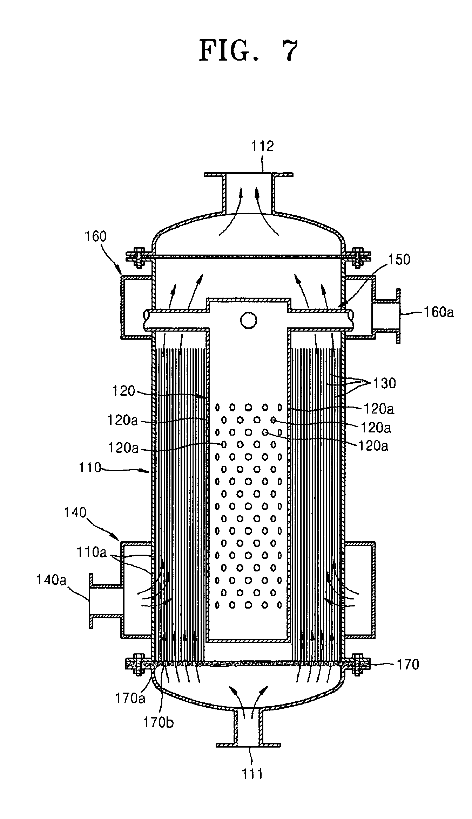

As illustrated in FIG. 7, washing water and compressed air is made to flow from the outer cylindrical member 110 and discharged out of the apparatus in an appropriate upward direction during the washing process. In such a structure, fluid resistance of the washing water and compressed air is reduced and fluid velocity thereof is increased, thereby improving the efficiency of the washing process.

Such improved efficiency of the present invention is attributed to a structure of the apparatus in which the washing water inlet pipeline 7 and the air inlet pipeline 10 are connected to the lower part of the outer cylindrical member 110, and the washing water discharge pipeline 11 is connected to the upper part of the outer cylindrical member 110. In order to achieve such high efficiency, the apparatus is designed so that filtered water flowing into the inner cylindrical member 120 discharges in a lateral direction from the upper part of the outer cylindrical member 110.

As described above, after the washing process is completed, very small amounts of the suspended solids separated from the flexible fibers 130 can flow into the inner cylindrical member 120 via the filtered water inlet holes 120A. While such suspended solids remain in the inner cylindrical member 120, if the filtration process is performed, the suspended solid may be contained in the water treatment tank 5, resulting in poor water quality.

Therefore, between the washing process and the filtration process, the third, fourth and fifth valves V3, V4, and V5 are automatically closed and the sixth valve V6 is automatically opened. As the sixth valve V6 is opened, suspended solids remaining in the
inner cylindrical member 120 are discharged via a residual suspended material discharge pipeline 12.

After such a process, the filtration process is again performed. Here, the first and second valves V1 and V2 are automatically opened and the third, fourth, fifth, and sixth valves V3, V4, V5, and V6 are automatically closed. When the first and second valves V1 and V2 are opened, the filtration process described above is performed.

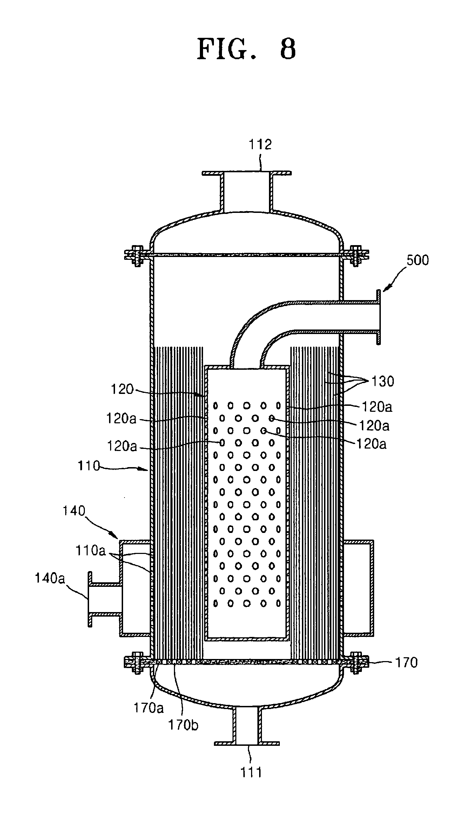

FIG. 8 is a cross sectional view of a filtering apparatus, which is not part of the present invention.

Referring to FIG. 8, in contrast to an embodiment of the present invention in which the plurality of the filtered water discharge pipelines 150 are disposed, a single filtered water discharge pipeline 500 is disposed. Also, the upper ring pipeline 160 is not disposed. The rest of the constitution and basic function are similar to the embodiment described above and thus, a detailed description is omitted here.

## Claims

1. A filtering apparatus using a flexible fiber filter module comprising:
an outer cylindrical member (110) including a number of source water inlet holes (110a) which penetrate an inner surface and an outer surface of the outer cylindrical member (110) in order for source water to flow into the outer cylindrical member (110), wherein the source water is supplied from outside;
an inner cylindrical member (120) including a number of filtered water inlet holes (120a) which penetrate an inner surface and an outer surface of the inner cylindrical member (120) disposed in the inner center of the outer cylindrical member (110);
a filter media (130) interposed between the outer cylindrical member (110) and the inner cylindrical member (120) to filter source water flowing from the source water inlet holes (110a) so as to become filtered water;
a lower ring pipeline (140) disposed in a lower outer part of the outer cylindrical member (110) surrounding the source water inlet holes (110a) to form an annular internal space (140') for source water inlet holes (110a) to connect together, wherein the lower ring pipeline (140) includes a source water inlet (140a) for source water to flow into the internal space (140');
a washing water inlet pipeline (7) providing a moving path for washing water, wherein the washing water washes the filter media (130) and thereby separates suspended solids adsorbed in the filter media (130) included in the outer cylindrical member (110);
a washing water discharge pipeline (11) to discharge washing water used to wash the filter media (130);
an upper ring pipeline (160) which is disposed to surround the upper outer part of the outer cylindrical member (110); and
an air inlet pipeline (10) to supply air to washing water which is made to flow into the outer cylindrical member (110),
wherein one end part of the washing water inlet pipeline (7) is connected to the source water inlet (140a) of the lower ring pipeline (140), the air inlet pipeline (10) is connected to the lower part of the outer cylindrical member (110), and the washing water discharge pipeline (11) is connected to the upper part of the outer cylindrical member (110),
**characterized in that** the filtering apparatus further comprises:
a plurality of filtered water discharge pipelines (150) in which one end part thereof is joined to the inner cylindrical member (120) and the other end part thereof penetrates the side portion of the outer cylindrical member (110) in a direction along its diameter in order for filtered water, obtained using the filter media (130), to flow into the inner cylindrical member (120) via the filtered water inlet holes (120a) and then to discharge out of the side of the outer cylindrical member (110), wherein the filtered water discharge pipelines (150) are disposed in the inner cylindrical member (120) in a cylindrical direction; **in that**
the upper ring pipeline (160) forms an annular internal space (160') for connecting with the plurality of filtered water discharge pipelines (150), wherein a filtered water outlet (160a) connecting with the internal space (160') is included in the upper ring pipeline (160); **in that**
the filtered water inlet holes (120a) disposed in the lowermost part of the inner cylindrical member (120) are disposed lower than the source water inlet holes (110a) disposed in the uppermost part of the outer cylindrical member (110), and **in that**
the other part of the washing water inlet pipeline (7) is connected to a water treatment tank (5) which contains filtered water discharged through the filtered water outlet (160a).

2. The filtering apparatus of claim 1,
wherein the filter media (130) is formed of a number of flexible fibers, the lower part of the flexible fibers is fixed on a fixing plate (170) disposed in the lower part of the outer cylindrical member (110), and a plurality of air inlet holes (170b) is disposed in the fixing plate (170) for air that flows in through the air inlet pipeline (10) to flow into the outer cylindrical member (110).

## Patentansprüche

1. Filtervorrichtung, welche ein Flexible-Faser-Filter-Modul verwendet, umfassend:
ein äußeres zylindrisches Element (110), umfassend eine Anzahl von Quellwassereinlasslöchern (110a), welche eine Innenfläche und eine Außenfläche des äußeren zylindrischen Elements (110) durchdringen, damit Quellwasser in das äußere zylindrische Element (110) fließt, wobei das Quellwasser von außerhalb zugeführt wird;
ein inneres zylindrisches Element (120), umfassend eine Anzahl von Filterwassereinlasslöchern (120a), welche eine Innenfläche und eine Außenfläche des inneren zylindrischen Elements (120), welches im inneren Zentrum des äußeren zylindrischen Elements (110) angeordnet ist, durchdringen;
ein Filtermedium (130), welches zwischen dem äußeren zylindrischen Element (110) und dem inneren zylindrischen Element (120) angeordnet ist, um Quellwasser zu filtern, welches aus den Quellwassereinlasslöchern (110a) fließt, um Filterwasser zu werden;
eine untere Ringrohrleitung (140), welche in einem unteren äußeren Teil des äußeren zylindrischen Elements (110) angeordnet ist und die Quellwassereinlasslöcher (110a) umgibt, um einen ringförmigen Innenraum (140') zu bilden, um die Quellwassereinlasslöcher (110a) miteinander zu verbinden, wobei die untere Ringrohrleitung (140) einen Quellwassereinlass (140a) umfasst, damit Quellwasser in den Innenraum (140') fließt;
eine Waschwassereinlassrohrleitung (7), welche einen Bewegungspfad für Waschwasser bereitstellt, wobei das Waschwasser das Filtermedium (130) wäscht und dadurch an dem in dem äußeren zylindrischen Element (110) enthaltenen Filtermedium (130) angelagerte schwebende Feststoffe trennt;
eine Waschwasserabflussrohrleitung (11) zum Abfließen von zum Waschen des Filtermediums (130) verwendetem Waschwasser;
eine obere Ringrohrleitung (160), welche angeordnet ist, um den oberen Außenteil des äußeren zylindrischen Elements (110) zu umgeben; und
eine Lufteinlassrohrleitung (10), um dem Waschwasser Luft zuzuführen, welches dazu veranlasst wird, in das äußere zylindrische Element (110) zu fließen,
wobei ein Endteil der Waschwassereinlassrohrleitung (7) mit dem Quellwassereinlass (140a) der unteren Ringrohrleitung (140) verbunden ist, die Lufteinlassrohrleitung (10) mit dem unteren Teil des äußeren zylindrischen Elements (110) verbunden ist und die Waschwasserabflussrohrleitung (11) mit dem oberen Teil des äußeren zylindrischen Elements (110) verbunden ist,
**dadurch gekennzeichnet, dass** die Filtervorrichtung ferner umfasst:
eine Mehrzahl von Filterwasserabflussrohrleitungen (150), bei welchen ein Endteil davon an das innere zylindrische Element (120) angeschlossen ist und der andere Endteil davon den Seitenabschnitt des äußeren zylindrischen Elements (110) in einer Richtung entlang dessen Durchmesser durchdringt, damit Filterwasser, welches unter Verwendung des Filtermediums (130) erhalten wird, in das innere zylindrische Element (120) durch die Filterwassereinlasslöcher (120a) fließt und dann aus der Seite des äußeren zylindrischen Elements (110) abfließt, wobei die Filterwasserabflussrohrleitungen (150) in dem inneren zylindrischen Element (120) in einer zylindrischen Richtung angeordnet sind; dass
die obere Ringrohrleitung (160) einen ringförmigen Innenraum (160') bildet, um die Mehrzahl der Filterwasserabflussrohrleitungen (150) zu verbinden, wobei ein Filterwasserauslass (160a), welcher mit dem Innenraum (160') verbunden ist, in der oberen Ringrohrleitung (160) enthalten ist; dass
die Filterwassereinlasslöcher (120a), welche in dem untersten Teil des inneren zylindrischen Elements (120) angeordnet sind, niedriger angeordnet sind als die Quellwassereinlasslöcher (110a), welche in dem obersten Teil des äußeren zylindrischen Elements (110) angeordnet sind, und dass
der andere Teil der Waschwassereinlassrohrleitung (7) mit einem Wasserbehandlungstank (5) verbunden ist, welcher durch den Filterwasserauslass (160a) abgeflossenes Filterwasser enthält.

2. Filtervorrichtung nach Anspruch 1,
wobei das Filtermedium (130) aus einer Anzahl von flexiblen Fasern gebildet ist, der untere Teil der flexiblen Fasern an einer Befestigungsplatte (170) befestigt ist, welche in dem unteren Teil des äußeren zylindrischen Elements (110) angeordnet ist, und eine Mehrzahl von Lufteinlasslöchern (170b) in der Befestigungsplatte (170) angeordnet ist, damit Luft, welche durch die Lufteinlassrohrleitung (10) hineinströmt, in das äußere zylindrische Element (110) strömt.

## Revendications

1. Dispositif de filtrage utilisant un module de filtrage à fibres flexibles, comprenant
un élément cylindrique extérieur (110) comprenant une multiplicité de trous d'entrée d'eau de source (110a) qui traversent une surface intérieure et une surface extérieure de l'élément cylindrique extérieur (110) afin que l'eau de source s'écoule à l'intérieur de l'élément cylindrique extérieur (110), dans lequel l'eau de source est fournie de l'extérieur;
un élément cylindrique intérieur (120) comprenant une multiplicité de trous d'entrée d'eau filtrée (120a) qui traversent une surface intérieure et une surface extérieure de l'élément cylindrique intérieur (120) disposé au centre intérieur de l'élément cylindrique extérieur (110);
une garniture de filtre (130) interposée entre l'élément cylindrique extérieur (110) et l'élément cylindrique intérieur (120) pour filtrer l'eau de source qui s'écoule depuis les trous d'entrée d'eau de source (110a) de façon à devenir de l'eau filtrée;
une canalisation annulaire inférieure (140) disposée dans une partie extérieure inférieure de l'élément cylindrique extérieur (110), entourant les trous d'entrée d'eau de source (110a) pour former un espace annulaire intérieur (140') pour connecter entre eux les trous d'entrée d'eau de source (110a), dans lequel la canalisation annulaire inférieure (140) comporte une entrée d'eau de source (140a) afin que l'eau de source s'écoule à l'intérieur de l'espace intérieur (140');
une canalisation d'entrée d'eau de lavage (7) procurant un chemin mouvant pour l'eau de lavage, dans lequel l'eau de lavage lave la garniture de filtre (130) et sépare ainsi les solides en suspension adsorbés dans la garniture de filtre (130) contenue dans l'élément cylindrique extérieur (110);
une canalisation de décharge d'eau de lavage (11) pour décharger l'eau de lavage utilisée pour laver la garniture de filtre (130);
une canalisation annulaire supérieure (160) qui est disposée de façon à entourer la partie extérieure supérieure de l'élément cylindrique extérieur (110); et
une canalisation d'entrée d'air (10) pour fournir de l'air à l'eau de lavage qui est amenée à s'écouler à l'intérieur de l'élément cylindrique extérieur (110),
dans lequel une partie d'extrémité de la canalisation d'entrée d'eau de lavage (7) est connectée à l'entrée d'eau de source (140a) de la canalisation annulaire inférieure (140), la canalisation d'entrée d'air (10) est connectée à la partie inférieure de l'élément cylindrique extérieur (110), et la canalisation de décharge d'eau de lavage (11) est connectée à la partie supérieure de l'élément cylindrique extérieur (110),
**caractérisé en ce que** le dispositif de filtrage comprend en outre:
une pluralité de canalisations de décharge d'eau filtrée (150) dans lesquelles une partie d'extrémité de celles-ci est raccordée à l'élément cylindrique intérieur (120) et l'autre partie d'extrémité de celles-ci traverse la partie latérale de l'élément cylindrique extérieur (110) dans une direction orientée suivant son diamètre afin que l'eau filtrée, obtenue en utilisant la garniture de filtre (130), s'écoule à l'intérieur de l'élément cylindrique intérieur (120) via les trous d'entrée d'eau filtrée (120a) et se décharge ensuite hors du côté de l'élément cylindrique extérieur (110), dans lequel les canalisations de décharge d'eau filtrée (150) sont disposées dans l'élément cylindrique intérieur (120) dans une direction cylindrique; **en ce que**
la canalisation annulaire supérieure (160) forme un espace annulaire intérieur (160') à connecter à la pluralité de canalisations de décharge d'eau filtrée (150), dans lequel une sortie d'eau filtrée (160a) connectée à l'espace intérieur (160') est comprise dans la canalisation annulaire supérieure (160); **en ce que**
les trous d'entrée d'eau filtrée (120a) disposés dans la partie la plus inférieure de l'élément cylindrique intérieur (120) sont disposés plus bas que les trous d'entrée d'eau de source (110a) disposés dans la partie la plus supérieure de l'élément cylindrique extérieur (110); et **en ce que**
l'autre partie de la canalisation d'entrée d'eau de lavage (7) est connectée à un réservoir de traitement de l'eau (5) qui contient de l'eau filtrée déchargée à travers la sortie d'eau filtrée (160a).

2. Dispositif de filtrage selon la revendication 1, dans lequel la garniture de filtre (130) est formée par une multiplicité de fibres flexibles, la partie inférieure des fibres flexibles est fixée à une plaque de fixation (170) disposée dans la partie inférieure de l'élément cylindrique extérieur (110), et une pluralité de trous d'entrée d'air (170b) sont disposés dans la plaque de fixation (170) pour l'air qui pénètre à travers la canalisation d'entrée d'air (10) pour s'écouler à l'intérieur de l'élément cylindrique extérieur (110).
